# EUROPEAN PATENT APPLICATION

(11) **EP 1 248 444 A1**
(43) Date of publication of application: **09.10.2002**
(21) Application number: 01108739.2
(22) Date of filing: 06.04.2001
(51) Int. Cl.: H04M 3/30, H04M 1/24, H04M 1/76

(54) **Analog telephone test set with low pass filter circuit and resistors coupled with the lead pair for preventing corruption of digital communication signals**

(71) Applicant: HARRIS CORPORATION, Melbourne Florida 32919 (US)
(72) Inventor: Pratt, Noel, Newbury Park, Cal. 91320 (US); Dipperstein, Michael, Ventura, Cal. 93003 (US); Slager, Jack, Westlake Cal. 91361 (US); Wong, Wayne, Camarillo, Cal. 93010 (US)
(74) Representative: Fleuchaus, Leo, Dipl.-Ing.

(57) **Abstract**

Corruption of digital data on a telephone line to which a telephone test set is to be coupled is obviated by inserting a low pass filter circuit in the tip-ring connection path to the test set. The low pass filter provides a low impedance path for only voice band signals, while blocking signals that fall within the high frequency range of digital data. The low pass filter circuit includes inductors coupled with respective tip and ring leads and a controllably switched, shunt-capacitor circuit coupled across the tip and ring leads. Also, resistors that compensate for impedance variations are coupled in series with the leads and are controllably by-passed, when said telephone test set is to go off-hook.

## Description

The present invention relates to telecommunication systems and equipment, and is directed to an enhancement of the controlled impedance, low-pass filter circuit, that allows a butt-in test set to bridge onto a metallic telephone line pair, without interfering with digital data traffic on the line. To accommodate circumstances, such as in an ADSL modem, where it may not be practical for loop current to saturate compensating series inductors installed in the tip and ring leads, the present invention provides an auxiliary line module containing resistors, which can be electrically removed by associated by-pass switches, when a decision is made to place the test set in an off-hook mode.

Analog telephone test sets are voice band devices thatallow telephone service personnel to gain metallic access to telephone company (telco)-provided wireline (e.g., copper) pairs, in the course of installation and maintenance of various analog telephone services (which typically have a bandwidth on the order of from 200 Hz to 4 KHz). Over the last several years, these conventional analog services have been supplemented or replaced by digital data services, which typically have a bandwidth on the order of from 20 KHz to 10 MHz, and are intended to be transported over the same type of wireline pairs as analog services.

Because it is often difficult for a technician to distinguish between analog lines and data lines in the field, he may connect an analog telephone test set to a data line, causing a disruption of the data service. Connection of an analog telephone test set to a pair of wires carrying digital data signals can be intentional or unintentional. Intentional connections occur when a telephone company technician connects to a pair of wires known by the technician to simultaneously carry digital data services and analog telephone service.

Digital data services designed to coexist with analog telephone services utilize modems that employ pass-band transmission schemes. The lower frequency limit to the data pass-band occurs at about 20 KHz or higher. Establishing a lower frequency boundary to the digital data service provides a frequency band for the analog telephone service that will be undisturbed by the digital data signaling. However, there are many digital data services, such as, but not limited to T1, ISDN, HDSL, SDSL, etc. (having bandwidths from 0 Hz to as high as several MHz) that were not intended to share their transmission medium with an analog telephone service. These data services usually employ baseband transmission schemes and have a theoretical low frequency of 0 Hz, leaving no frequency band for analog telephone service. Connection of an analog test telephone to these types of data service would typically be unintentional.

More recently, asymmetrical digital subscriber line (ADSL) services, which are designed to share copper wire pairs with analog telephone services, have been installed in many areas of the country. In the future, additional data services (such as VDSL) may be installed so as to share copper wires with analog telephone services. In the case of these shared data services, it is desirable that an analog test telephone be able to go off-hook for accessing the analog telephone service, without disturbing a co-existing data service.

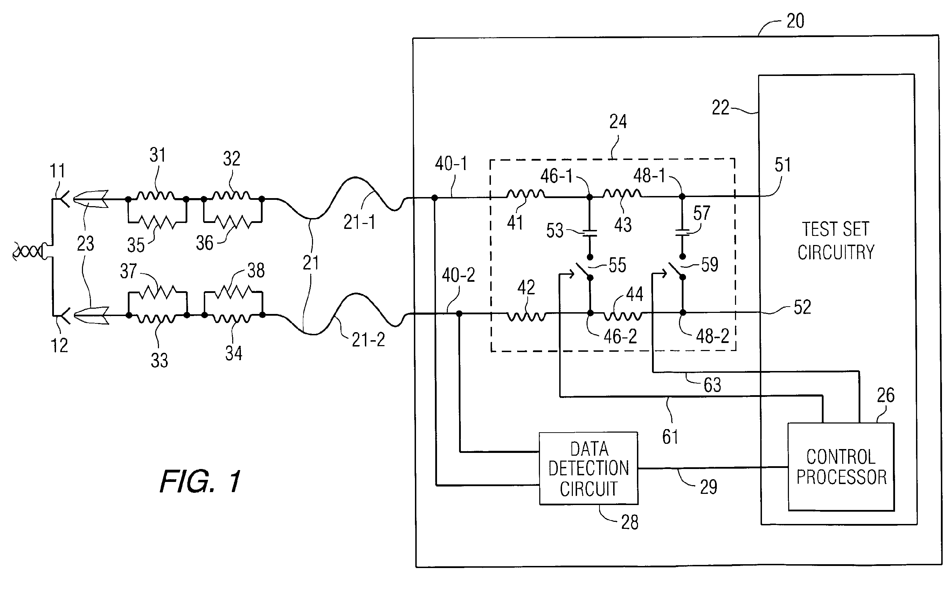

Advantageously, the invention as illustrated in Figure 1 successfully prevents such disturbance of data traffic on the line by installing a controlled impedance - low pass filter circuit in the front end of the test set. In addition to allowing the test set to be bridged anywhere along a telephone wireline pair without disrupting digital data transmission, the controlled impedance circuit protects data services that do not share lines with analog services, should the test set be accidentally connected to lines conveying only data services.

Figure 1 shows a telephone wireline pair 10, comprised of metallic tip (T) and ring (R) leads 11 and 12 (which may be carrying digital data traffic), that are to be bridged by an analog (voice band) telecommunication device 20, such as a craftsperson's butt-in test set. In order to connect its internal circuitry 22 to the wireline pair 10, the test set 20 contains a test lead pair 21 that is terminated by connectors (such as alligator clips) 23.

For avoiding disruption of digital data that may be present on the wireline pair 10, a controllably configurable low pass filter 24 is installed between the test lead pair 21 and the test telephone's circuitry 22, proper. The low pass filter 24 may comprise a multi-pole, bi-directional, low pass filter (such as one containing four to six poles, as a non-limiting example), implemented using inductor (L) and capacitor (C) elements. The choice of low pass filter type and number of poles is based upon the desired slope of the filter's attenuation band, and more than one type of filter may be employed. A four-pole, constant-K configuration may be used.

The input impedance of the test set's low pass filter increases smoothly from the upper boundary of the analog/audio band to the lower boundary of the data band, and the filter suppresses high frequency noise that may be generated by the test telephone. (If not suppressed, such high frequency noise would degrade the data signal.) The slope of the transition band of the filter, from the high end of the audio band to the low end of the data band, is steep enough to result in substantial attenuation (e.g., on the order of at least 60 dB) when the data band is reached.

In the filter architecture of Figure 1, series inductors 41 and 42 are installed in respective tip and ring line segments 40-1 and 40-2, to which lead segments 21 of the test lead pair 21 are connected. Additional inductors 43 and 44 are coupled in series between the inductors 41 and 42 and respective tip and ring ports 51 and 52 of the telephone test set's internal circuitry 22. A first switched capacitor 53 and an associated switch 55 are coupled across nodes 46-1 and 46-2 of the line segments 40-1 and 40-2 between inductors 41, 43 and between the inductors 42, 44. A second switched capacitor 57 and an associated switch 59 are coupled across nodes 48-1 and 48-2 of the line segments 40-1 and 40-2 between inductor 43 and tip port 51, and between inductor 44 and ring port 52. The switch 55 is controlled by a control line 61 from the test set's supervisory microcontroller 26, while the switch 59 is controlled by a control line 63 from the microcontroller 26.

In order to determine whether data signals are present on the line 10, the line segments 40-1 and 40-2 are coupled to a digital data detection circuit 28, such as a multi-band frequency discriminator unit of the type disclosed in the specifications of U.S. Patent No. 4,777,645, and in the specification of U.S. Patent No. 4,939,765. This multi-band frequency discriminator unit contains a plurality of pass-band filter circuits, that are tuned to respective sensitivity frequency ranges that enable (out-of-audio) digital data signals to be detected.

Where the telephone testset contains digital data transceiver components, the frequency discriminator unit may controllably couple digital data signals to and/or enable such components, for the purpose of monitoring detected data traffic. In response to a 'data' detect signal on the output line 29 from the digital data detection circuit 28, the microcontroller 26 may generate visual or audio alert/warning indication advising the technician that he has connected (clipped on) to a data line, so that he will not place the test set in an off-hook state, when connected to a data-transporting wireline pair.

Because the capacitance across the test leads 21 can be expected to vary, it is difficult to maintain a continuous high input impedance over a wide operational frequency band (e.g., 0 Hz to 10 MHz), that encompasses both analog and digital data services in the on-hook state of the test set. To avoid variations (drops) in impedance, the test lead capacitance requires compensations For this purpose, in-line inductors 31, 32 and 33, 34 are placed in circuit with the test lead segments 21-1 and 21-2 immediately adjacent to the test clips 23. These series inductors serve to eliminate the effect of the test lead capacitance and restore the impedance response to a high level over the desired frequency band. Coupled in parallel with these series inductors are associated load resistors 35, 36, and 37, 38, which reduce the inductor Q, and shape data signals for detection by the data detection circuit 28.

The compensating series inductors 31, 32 and 33, 34 are required in the on-hook state of the test telephone, but would disrupt normal performance of the test telephone in its off-hook state. As a consequence, these inductors must be effectively (electrically) taken out of the circuit when the test telephone is in its off-hook state. Taking these inductors out of the circuit is achieved by making the cores of the inductors of a very high permeability material, which saturates with the flow of direct current through the inductor's windings. When the test telephone goes off-hook, direct current from the telephone company central office battery flows through the series inductors into the telephone, saturating the cores, reducing the inductance to a value that does not interfere with the normal operation of the test telephone.

The functional parameters of the low pass filter are controllably adjusted by the microcontroller 26 in dependence upon the operating state of the test set: 1) on-hook; and 2) off-hook. In the on-hook state, the input AC impedance of the test set must be kept at a high value, relative to the characteristic impedance of the telephone line. (In a typical case, the input impedance of the test set may be on the order of two hundred times the characteristic impedance of the telephone line.) Maintaining a high input impedance avoids loading down any of the data services typically transported over telephone copper wire pairs such as V.90 modems in the voice frequency band, and ISDN, T1, HDSL, SDSL, ADSL etc. in higher frequency bands.

In order to provide a high input impedance when the test telephone is on-hook, the front-end low pass filter is effectively controllably removed. If left in place when the test telephone transitions to on-hook, the filter would load down and seriously degrade the performance of low to medium band data transceivers, such as audio band modems and ISDN transceivers. To remove the low pass filter, while maintaining the desired input impedance in the data band, the test set's microcontroller supplies control signals over control lines 61 and 63, that open the switches 55 and 59 and switch out the low pass filter's shunt capacitors 53 and 57. The inductors 41 and 43 in line segment 40-1 and the inductors 42 and 44 in line segment 40-2 remain in circuit with the test telephone's two respective input leads 21-1 and 21-2.

When the technician places the telephone test set in the off-hook state, the low pass filter presents a relatively low input (AC) impedance (e.g., example on the order of 600 ohms) to audio frequency band signals, so that the telephone can perform its normal off-hook functions. At the same time, the low pass filter presents a relatively high AC impedance (e.g., greater than 40 Kohms) to data frequency band signals, which avoids loading down data service sharing the same pair of wires as the analog service. This allows the test set to draw dial tone and place calls by way of the analog telephone service without disturbing a coexisting data service on wireline pair 10.

When placing the telephone test set in an off-hook state, the microcontroller 26 operates the switches 55 and 59, so as to place the shunt capacitors 53 and 57 in circuit with the inductors 41 and 43, and inductors 42 and 44. This causes the filter to provide the required 600 ohms impedance in the telephone's audio band, and a relatively large impedance (greater than 40k ohms) in the frequency range occupied by data services that share copper wire pairs with the analog telephone services. By switching in the low pass filter just prior to going off-hook, high frequency noise transients caused by going off-hook are effectively suppressed. Once the test set has been placed in the off-hook condition, the filter acts as a frequency sensitive impedance circuit that presents a low impedance in the test telephone's audio band and a high impedance in the data band to prevent disturbance of data signals on the line under test.

The data detection circuit 28 "also" serves to warn the technician that he has connected (clipped on) to a data line, so that the technician will not place the test set in an off-hook state while connected to a data-transporting wireline pair. If the technician knows he has connected to a data service that shares its line with an analog telephone service, he has the option of going off-hook and testing the analog telephone service without disrupting the coexisting data service.

The filter circuit allows an analog device (e.g. butt set) to bridge onto any location along a metallic telephone line pair without interfering with digital data traffic that may be present on the line, there are cases, such as with an ADSL modem, where it may not be practical to rely on the loop current to saturate the compensating series inductors 31, 32 and 33, 34.

The present invention includes a method of preventing the corruption of digital data being transmitted over a telephone line in the course of coupling a voice band telephone device to said telephone line, characterized by the steps of:
(a) providing a low pass filter circuit that is effective to provide a low impedance path and pass therethrough only voice band signals, while providing a high impedance to and thereby effectively blocking transmission of signals that fall within the high frequency range of digital data that may be present on said telephone line, said low pass filter circuit including inductors coupled with respective tip and ring line segments of a lead pair by way of which said voice band telephone device is connectable to said telephone line, and a controllably switched, shunt-capacitor circuit coupled across said tip and ring line segments, and including resistors that are capable of compensating for impedance variations across said lead pair and are adapted to be controllably coupled in series with line-coupling leads that are adapted to placed in circuit with said telephone line; and
(b) interfacing said voice band telephone device to said line by way of said low pass filter circuit.

The invention also includes an arrangement for preventing corruption of digital data that may be transmitted over a telephone line in the course of coupling a voice band telephone device to said telephone line, characterized in that said arrangement comprising line coupling communication ports adapted to couple said voice band telephone device with said telephone line, and a low pass filter circuit that is effective to provide a low impedance path and pass therethrough only voice band signals, while providing a high impedance to, and thereby effectively blocking, the transmission of signals that fall within the high frequency range of digital data that may be present on said telephone line, said low pass filter circuit having first ports thereof coupled to said line coupling communication ports, and second ports thereof coupled to said voice band telephone, and including inductors coupled with respective tip and ring line segments of a lead pair by way of which said voice band telephone device is connectable to said telephone line, and a controllably switched, shunt-capacitor circuit coupled across said tip and ring line segments, and resistors that compensate for impedance variations across said lead pair and are controllably coupled in series with line-coupling leads adapted to be coupled to said telephone line.

Advantageously, the present invention provides these compensating inductors which are replaced by resistors. Principal advantages of using resistors are a more well behaved frequency response and smaller physical size. In order to be able to take out or by-pass the resistors when a decision has been made to place the telephone test set in an off-hook state, controlled relays or switch circuits are coupled in parallel with the resistors. In addition, signals on the tip and ring leads are buffered through a buffer amplifier, so as to isolate the signals from the parasitic capacitance present between the line cord and the test set. The buffer amplifier and resistors work together to isolate other reactances in the tip/ring circuit of the test set and provide a flatter frequency response for the data detect circuit.

The invention will now be described, by way of example, with reference to the accompanying drawings in which:
Figure 1 is a schematic block diagram of a front end impedance control circuit for an analog telephone test set, and
Figure 2 is a schematic block diagram of the modification of the impedance control circuit of Figure 1 in accordance with the present invention.

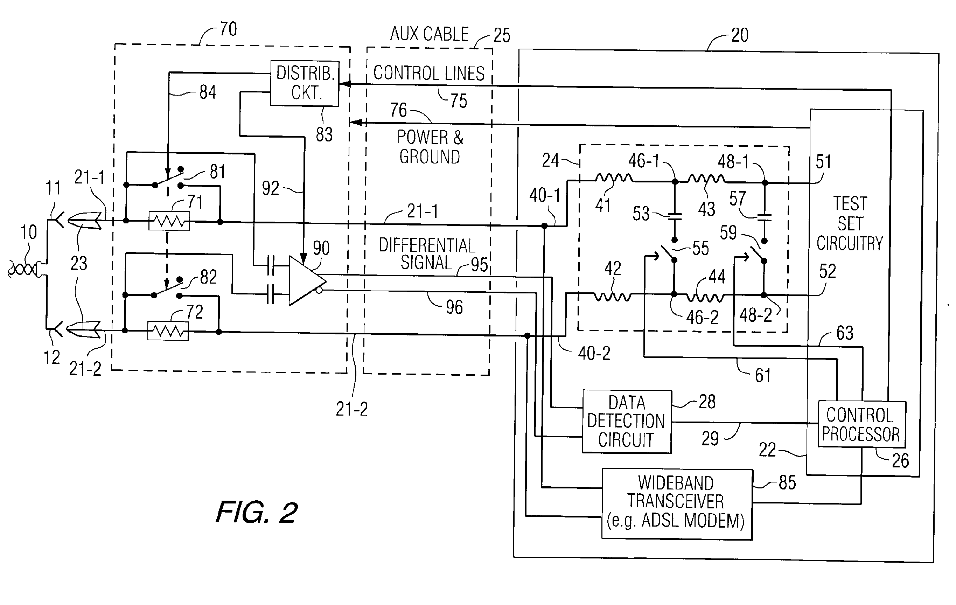

Attention is now directed to Figure 2, which diagrammatically illustrates the manner in which the controllably configurable low pass filter circuit of Figure 1 is modified in accordance with the present invention. In lieu of the capacitance-compensating series inductors 31, 32 and 33, 34 employed in the circuit architecture of Figure 1, a pair of resistors 71 and 72 within an auxiliary line module 70 are coupled in circuit with the lead segments 21-1 and 21-2 of the line cord 21 containing the test lead pair 21. The auxiliary line module 70 is coupled to the test set by way of an auxiliary cable 25, which contains the test lead segments, as well as additional signaling, control and power leads that connect the module 70 with the test set 20.

Similar to the series inductors 31, 32 and 33, 34 installed in the tip and ring leads for the filter circuit, the resistors 71 and 72 compensate for the effect of the test lead capacitance and restore the impedance response to a high level over the desired frequency band. The above, advantages of using resistors include a more well behaved frequency response and smaller physical size. Although the compensating resistors 71 and 72 are employed in the on-hook state of the test telephone, they may disrupt normal analog performance of the test telephone in its off-hook (voice band access) state.

In order to be able to remove the resistors from the circuit when the test telephone is in its off-hook state, the auxiliary line module 70 further includes respective (controlled relay) shunt switches 81 and 82, which are respectively coupled in parallel with the resistors 71 and 72. In addition, the tip and ring test lead segments 21-1 and 21-2 are coupled to a buffer amplifier 90, differential outputs of which are coupled over leads 95 and 96 within auxiliary cable 25 to the data detection circuit 28. The incorporation of a buffer amplifier in the module 70 serves to isolate the (tip and ring) signals from the parasitic capacitance present between the line cord and the test set.

The by-pass (shunt) switches 81 and 82 may be controlled by a relay actuator circuit (which may be incorporated into an optional signal distribution circuit 83 to reduce the need to transport additional control signals through the cable). Control signals for operating the by-pass switches may be sourced from a suitable control circuit, such as but not limited to the test set's microcontroller, with the control signals being coupled over a set of auxiliary control lines 75 within auxiliary cable 25. Similarly, the control circuit may supply amplifier control signals via the signal distribution circuit over a control line 92 to set the operational parameters of the buffer amplifier 90. Power and ground for the module 70 are supplied from the test set circuity via leads 76 within the auxiliary cable plant 25.

The difference between the two circuit architectures involves the present invention's use of resistors 71 and 72 and associated by-pass switches 81 and 82, plus the incorporation of buffer amplifier 90 in the auxiliary line module, in place of the compensating in-line inductors that depend upon there being sufficient loop current to saturate the high permeability inductor cores (and thereby reduce their inductances to values that do not interfere with the normal operation of the test telephone).

There are circumstances where it may not be practical for the loop current to saturate such compensating series inductors, such as in an application employing a wideband transceiver (such as an ADSL modem) shown at 85 as being coupled with the tip and ring links 40-1 and 40-2 and interfacing with the control processor 26. The data detection circuit 28 monitors the (differential) output of the buffer amplifier 90. In response to the output of the data detection circuit indicating the absence of data on the monitored tip/ring pair when a decision is made to go off-hook, the control circuit (e.g., the microcontroller 26) supplies control signals to dose the by-pass switches 81 and 82, and thereby by-passing resistors 71 and 72.

Namely, the present invention's resistor-based enhancement to the controlled impedance/filter provides for the same effective functionality of that filter circuit, without having to rely on loop current (which may not be sufficient in ADSL modem applications) to saturate (and thereby effectively remove) compensating inductors placed in series with the tip and ring leads. Namely, when a decision is made to go off-hook, the resistors may be readily by-passed by controlled switch circuits coupled in parallel with the resistors. In addition, buffering the signals on the tip and ring leads through a buffer amplifier serves to isolate the signals from the parasitic capacitance present between the line cord and the test set.

Corruption of digital data on a telephone line to which a telephone test set is to be coupled is obviated by inserting a low pass filter circuit in the tip-ring connection path to the test set. The low pass filter provides a low impedance path for only voice band signals, while blocking signals that fall within the high frequency range of digital data. The low pass filter circuit includes inductors coupled with respective tip and ring leads and a controllably switched, shunt-capacitor circuit coupled across the tip and ring leads. Also, resistors that compensate for impedance variations are coupled in series with the leads and are controllably by-passed, when said telephone test set is to go off-hook.

## Claims

1. A method of preventing the corruption of digital data being transmitted over a telephone line in the course of coupling a voice band telephone device to said telephone line, **characterized by** the steps of:
(a) providing a low pass filter circuit that is effective to provide a low impedance path and pass therethrough only voice band signals, while providing a high impedance to and thereby effectively blocking transmission of signals that fall within the high frequency range of digital data that may be present on said telephone line, said low pass filter circuit including inductors coupled with respective tip and ring line segments of a lead pair by way of which said voice band telephone device is connectable to said telephone line, and a controllably switched, shunt-capacitor circuit coupled across said tip and ring line segments, and including resistors that are capable of compensating for impedance variations across said lead pair and are adapted to be controllably coupled in series with line-coupling leads that are adapted to placed in circuit with said telephone line; and
(b) interfacing said voice band telephone device to said line by way of said low pass filter circuit.

2. A method as claimed in claim 1, **characterized by** said resistors are installed in series with said line-coupling leads, and are adapted to be controllably by-passed, in response to said voice band telephone device preparing to transition to an off-hook state.

3. A method as claimed in claim 1, **characterized by** said tip and ring line segments are coupled to a digital data detector through a buffer amplifier, said resistors being adapted to be controllably by-passed, in response to said voice band telephone device preparing to transition to an off-hook state.

4. A method as claimed in claim 1, characterized step (b) comprises inserting said low pass filter circuit in a tip-ring connection path between said line and said voice band telephone device, and conducting voice band communications between said line and said voice band telephone device through said low pass filter circuit, including the step (c) of monitoring said line for the presence of digital data by way of a signal path that is exclusive of a path through said low pass filter circuit.

5. A method as claimed in claim 1, **characterized by** said voice band telephone device comprises an analog telephone test set, in which said low pass filter circuit is configured to provide an input impedance that increases from the upper boundary of the analog/audio band to the lower boundary of the data band and to suppress high frequency noise that may be generated by the voice band telephone device and, if not suppressed, would degrade said digital data.

6. A method as claimed in claim 1, **characterized by** step (a) includes controllably adjusting parameters of said low pass filter circuit in accordance with the operating state of said voice band telephone device, and includes for an on-hook state of said voice band telephone device, causing said low pass filter to exhibit a high AC impedance relative to the characteristic impedance of said telephone line, to avoid loading digital data transported over said telephone line.

7. A method as claimed in claim 1, **characterized by** step (b) includes controllably switching out said shunt-capacitor circuit, while retaining said inductors coupled with said respective tip and ring line segments.

8. A method as claimed in claim 1, **characterized by** step (b) comprises placing said shunt-capacitor circuit in circuit with said inductors of said low pass filter circuit prior to placing said voice band telephone device in an off-hook state, so as to effectively suppress high frequency noise transients associated with going off-hook.

9. An arrangement for preventing corruption of digital data that may be transmitted over a telephone line in the course of coupling a voice band telephone device to said telephone line, **characterized in that** said arrangement comprising line coupling communication ports adapted to couple said voice band telephone device with said telephone line, and a low pass filter circuit that is effective to provide a low impedance path and pass therethrough only voice band signals, while providing a high impedance to, and thereby effectively blocking, the transmission of signals that fall within the high frequency range of digital data that may be present on said telephone line, said low pass filter circuit having first ports thereof coupled to said line coupling communication ports, and second ports thereof coupled to said voice band telephone, and including inductors coupled with respective tip and ring line segments of a lead pair by way of which said voice band telephone device is connectable to said telephone line, and a controllably switched, shunt-capacitor circuit coupled across said tip and ring line segments, and resistors that compensate for impedance variations across said lead pair and are controllably coupled in series with line-coupling leads adapted to be coupled to said telephone line.

10. An arrangement as claimed in claim 9, **characterized in that** said resistors are installed in series with said line-coupling leads, and are adapted to be controllably by-passed, in response to said voice band telephone device preparing to transition to an off-hook state, and in which said tip and ring line segments are coupled to a digital data detector through a buffer amplifier, said resistors being controllably by-passed, in response to said voice band telephone device preparing to transition to an off-hook state.

11. An arrangement as claimed in claim 9, **characterized in that** said low pass filter circuit is configured to provide an input impedance that increases from the upper boundary of the analog/audio band to the lower boundary of the data band and to suppress high frequency noise that may be generated by the voice band telephone device and, if not suppressed, would degrade said digital data, and in which parameters of said low pass filter step are controllably adjustable in accordance with the operating state of said voice band telephone device.
